**Europäisches Patentamt**

**European Patent Office**

**Office européen des brevets**

(19)

(11) Veröffentlichungsnummer : **0 348 699 B1**

(12) # EUROPÄISCHE PATENTSCHRIFT

(45) Veröffentlichungstag der Patentschrift :
**19.08.92 Patentblatt 92/34**

(51) Int. Cl.$^5$ : **H01M 4/04, H01M 4/26**

(21) Anmeldenummer : **89110193.3**

(22) Anmeldetag : **06.06.89**

(54) **Verfahren und Vorrichtung zum kontinuierlichen Füllen von mit Stromableiterfahnen versehenen Faserstrukturelektrodengerüsten.**

(30) Priorität : **01.07.88 DE 3822197**

(43) Veröffentlichungstag der Anmeldung :
**03.01.90 Patentblatt 90/01**

(45) Bekanntmachung des Hinweises auf die
Patenterteilung :
**19.08.92 Patentblatt 92/34**

(84) Benannte Vertragsstaaten :
**DE ES FR GB SE**

(56) Entgegenhaltungen :
**CH-A- 491 512**
**CH-A- 641 594**
**PATENT ABSTRACTS OF JAPAN, Band 5, Nr.**
**11 (E-42)[683], 23. Januar 1981; & JP-A-55 139**
**763 (NIPPON DENCHI K.K.) 31-10-1980**

(73) Patentinhaber : **DEUTSCHE**
**AUTOMOBILGESELLSCHAFT MBH**
**Podbielski Strasse 293**
**W-3000 Hannover (DE)**

(72) Erfinder : **Imhof, Otwin, Dr.**
**Ruthmännin 34**
**W-7440 Nürtingen (DE)**

EP 0 348 699 B1

## Beschreibung

Gegenstand der Erfindung ist ein Verfahren zum quasi kontinuierlichen Füllen von mit Stromableiterfahnen versehenen Faserstrukturelektrodengerüsten für Akkumulatoren mit einer Aktivmassenpaste unter der Einwirkung von Schwingungen.

Es ist bekannt, Elektroden für galvanische Zellen dadurch herzustellen, daß ein poröses Elektrodengerüst, z. B. ein Metall oder metallisierter Kunststoffschaum oder ein Metallfaserstrukturgerüst bzw. ein metallisiertes Kunststofffaserstrukturgerüst mit aktiven Füllstoffen, der aktiven Masse, gefüllt wird. Um das Einbringen der aktiven Masse in die Poren zu erleichtern und zu vervollständigen, sind mechanische bzw. physikalische Hilfsmittel wie Walzen, Rakel, aber auch die Einwirkung von Schwinungen, insbesondere Ultraschall bekannt. So ist in DE-PS 1 210 417 ein Verfahren, disperse Stoffe in poröse Körper einzulagern, beschrieben, welches dadurch gekennzeichnet ist, daß ein Ultraschallschwinger mit dem in zähpastöser Konsistenz angesetzten dispersen Stoff beschichtet, der poröse Körper aufgelegt, mit dispersem Stoff gleicher Konsistenz überschichtet und während gleichzeitiger Ultraschallerregung gegen den Ultraschallschwinger gedrückt wird. Im Augenblick der Abschaltung der Ultraschallschwingungen wird der gefüllte Körper aus der Vorrichtung entfernt. Dieses Verfahren gestaltet sich außerordentlich arbeits- und damit kostenintensiv, und es bestehten Schwierigkeiten bei der Entnahme des gefüllten Körpers aus der Vorrichtung. In US-PS 3 262 815 ist ein kontinuierliches Verfahren zur Herstellung von Batterieelektroden beschrieben, bei dem ein Stahlwolleband zunächst elektrolytisch metallisiert wird, das Band dann mit einer Aufschlemmung des aktiven Elektrodenmaterials überschichtet wird, wobei das aktive Elektrodenmaterial mit Hilfe eines angelegten Vakuums in die Zwischenräume des Bandes gesaugt wird. Danach wird das Band gewaschen, getrocknet, zwischen Rollen komprimiert und auf Elektrodengröße geschnitten. Der Stromableiter muß an der fertigen Elektrode befestigt werden, was erfahrungsgemäß zu keinen besonders haltbaren Verbindungen führt. In der Schrift werden insgesamt drei verschiedene Methoden zum Füllen von Elektrodengerüsten beschrieben, wobei bemerkt wird, daß mit einer Methode allein keine vollständige Füllung des Gerüstes erzielbar ist, worauf ja auch die bei dem kontinuierlichen Verfahren notwendige Kompaktierung des gefüllten Gitters hindeutet. Es wird in der Schrift daher vorgeschlagen, eine Kombination aus allen drei Methoden, nämlich Eintauchen, Überschichten und mechanisches Einarbeiten anzuwenden. Dennoch kann auch bei dieser kombinierten Füllmethode auf das Kompaktieren des gefüllten Gerüstes nicht verzichtet werden. Auch dieses Verfahren ist somit wegen der Vielzahl an Behandlungsschritten recht aufwendig.

Die Aufgabe der Erfindung besteht darin, ein einfaches Verfahren sowie eine Vorrichtung zum Füllen von mit angeschweißten Stromableiterfahnen versehenen Faserstrukturelektrodengerüsten zu finden, das einfach, billig und schnell durchzuführen ist und weitgehend automatisch ablaufen kann.

Diese Aufgabe wird durch das in dem Patentanspruch 1 beschriebene Verfahren sowie durch die in dem Patentanspruch 4 beschriebene Vorrichtung gelöst.

Bei dem Verfahren bzw. der Vorrichtung wird zunächst das ungefüllte Faserstrukturelektrodengerüst mit seiner Stromableiterfahne in einer Transportvorrichtung befestigt. Diese Transportvorrichtung kann aus einem Kettenförderer oder einer Karussellfördereinrichtung bestehen. Der Werkstückträger der Transportvorrichtung ist so ausgelegt, daß ohne seinen Wechsel verschiedene Formate von Faserstrukturelektrodengerüsten befestigt werden können und daß das Elektrodengerüst beim Weitertransport nicht herausrutschen kann. Das Befestigen der Faserstrukturelektrodengerüste in der Transportvorrichtung kann sowohl manuell, als auch von einem Handhabungsautomaten vorgenommen werden. Mit Hilfe der Transportvorrichtung werden nun die Faserstrukturelektrodengerüste nacheinander zu den einzelnen Bearbeitungsstationen transportiert, in denen getrennt voneinander je ein Verfahrensschritt durchgeführt wird. Die Elektrodengerüste werden von der einen Station zur nächsten Bearbeitungsstation in der gleichen Zeit gebracht. Die Taktzeit hierfür ist einstellbar und liegt vorzugsweise zwischen 5 s und 25 s. Nach dem Befestigen des Faserstrukturelektrodengerüstes an der Transportvorrichtung werden die Faserstrukturelektrodengerüste in den mit aktiver Masse versehenen Füllraum eingetaucht. Bevorzugt werden die Faserstrukturelektrodengerüste dabei durch Leitbleche geführt, so daß sie nicht den Gefäßrand berühren können. Die aktive Masse in dem Füllraum ist in Schwingungen versetzt, um ein leichtes Eindringen der Aktivmasse in die Poren des Faserstrukturelektrodengerüstes zu ermöglichen. Die Schwingungen werden bevorzugt durch Schwingplatten erzeugt, deren Haupterstreckung vertikal angeordnet ist und die senkrecht zu der Fläche des Faserstrukturelektrodengerüstes hin und her bewegt werden. Der Antrieb der Schwingplatten kann auf die verschiedensten Arten erfolgen, z. B. mittels eines Umwuchtmotors, mittels eines Klopfers oder eines Elektrovibrators. Es hat sich bewährt, wenn die Schwingplatte mit einer Frequenz von etwa 30 Hz bis 100 Hz auf das Faserstrukturelektrodengerüst zu und von ihm weg bewegt wird. Anstatt einer Schwingplatte kann auch ein Elektroinnenvibrator eingesetzt werden. Zur Füllung wird das zu füllende Elektrodengerüst parallel zur Schwingplatte in einem Abstand von etwa 2 bis 30 mm angeordnet, bevorzugt wird ein Abstand von 5 bis 15 mm. Im Betrieb bewegt sich die Schwingplatte parallel auf die Hauptfläche des Gerüstes hin und wieder weg. Bei maximaler Amplitude der Schwingplatte darf die Wandung des Füllgefäßes nicht berührt werden. Darüber hinaus soll ein zusätzlicher Abstand von der Schwingplatte zur Wandung vorhanden sein, so daß die aktive Masse in dem Zwischenraum zwischen Schwingplatte und Wandung nicht spritzen kann. Das Faserstrukturelektrodengerüst wird gefüllt, während es durch den mit der aktiven Masse versehenen Füllraum transportiert wird. Je nach der für das Füllen erforderlichen Zeit ist die Länge des Füllraumes oder die Verweilzeit in dem Füllraum anzupassen. Bei längeren Füllräumen empfiehlt es sich, in dem Füllraum mehrere Schwingplatten an zuordnen. Am Ende des Füllraumes wird das mit Paste gefüllte Faserstrukturelektrodengerüst ausgetaucht und beim Austauchen mit zwei sich automatisch anlegenden, gegenüberliegenden Schabern von der Hauptmasse der anhaftenden Paste auf den Hauptflächen befreit. Die abgestreifte Paste tropft sofort in den Füllraum zurück und geht nicht verloren. Die Lippen der Schaber werden vorzugsweise aus Nickelblech hergestellt. Anschließend gelangt das Faserstrukturgerüst in eine Reinigungsstation mit zwei sich gegenläufig drehenden Bürstenwalzen, die die Flächen und die langen Stirnseiten der gefüllten Faserstrukturelektrodengerüste von noch in den Vertiefungen sitzenden und sonst noch anhaftenden Resten aktiver Masse, z. B. am Übergang vom Gerüst zur Stromableiterfahne, befreit. Dazu wird die Elektrode zwischen den sich drehenden Bürstenwalzen abgesenkt und wieder herausgezogen oder die Bürstenwalzen werden entsprechend über das Faserstrukturelektrodengerüst bewegt. Damit die Bürstenwalze nicht verschmutzt, ist jeder von ihnen eine Abstreifwalze zugeordnet, die sich mitdreht und zum anderen die Borsten so umlenkt, daß anhaftende Pastenpartikel in das Auffanggehäuse der Bürstenstation abgespritzt werden. Zusätzlich können, in Abhängigkeit von der Pastenzähigkeit, der Elektrodendicke und dem Elektrodenformat die Bürstenwalzen in festgelegten Intervallen mit Wasser gespült werden. Nach dem Bürsten der Seitenflächen wird in einem weiteren Schritt die Aktivmasse von noch nicht gereinigten Kanten entfernt. In erster Linie ist d ies die untere Stirnseite der gefüllten Elektrode. Diese wird durch eine Bürstenwalze, deren Achse senkrecht zur Gerüstfläche steht, abgebürstet. Nach diesem letzten Reinigungsschritt können die gefüllten, feuchten Elektroden getrocknet werden, z. B. durch Umluft oder einen Infrarotstrahler und dann aus der Transportvorrichtung entnommen werden, oder sie werden sofort entnommen und erst danach getrocknet.

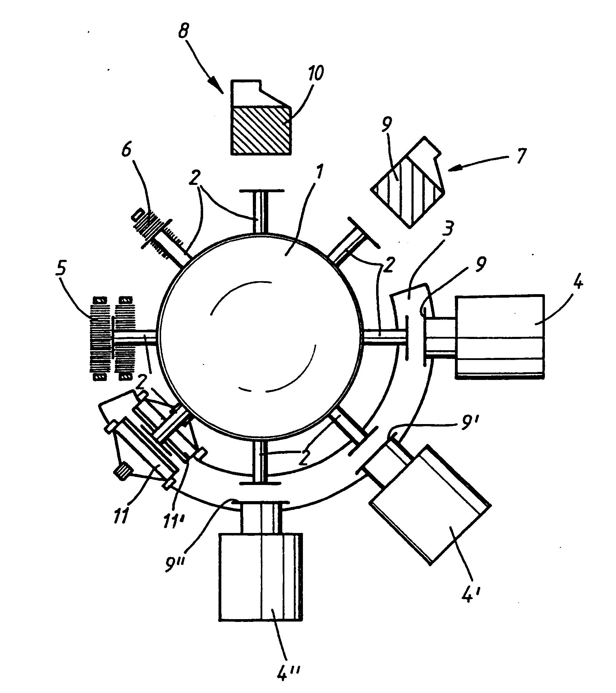

Die Abbildung zeigt schematisch eine Füllvorrichtung für Faserstrukturelektrodengerüste in Draufsicht. Die Füllvorrichtung besteht aus einem Transportkarussell 1, das mit Transportarmen 2 ausgerüstet ist. Um das Karussell herum ist die Einlegestation 7, der Pastenbehälter 3 sowie die Flächenbürststation 5, die Kantenbürststation 6 und die Abnahmestation 8 angeordnet. Die in dem Pastenbehälter 3 befindliche Paste wird durch drei Vibratoren 4 bis 4″ die senkrecht in die Paste ragende Schwingplatten 9 bis 9″ zur Übertragung der Energie auf die Paste enthalten, in Schwingungen versetzt. In der Einlegestation 7 wird ein in Aufsicht auf die flache Seite dargestelltes leeres Faserstrukturelektrodengerüst senkrecht an den Transportarm 2 gehängt, der Transportarm wird durch das sich in Uhrzeigersinn drehende Transportkarussell über den Pastenbehälter 3 geführt und das Faserstrukturelektrodengerüst wird in die Aktivmassenpaste eingetaucht. Das Faserstrukturgerüst wird nun durch die mittels der Schwingplatten und Vibratoren 4 bis 4″ in Schwingungen versetzte Paste geführt und am Ende des Behälters wieder ausgetaucht. Während des Austauchens wird mit zwei Lippen (11, 11′) die überschüssige Paste von dem Faserstrukturelektrodengerüst abgestreift. Das grob vorgereinigte Faserstrukturelektrodengerüst gelangt nun in die Flächenbürststation 5, in der die Flächen des gefüllten Faserstrukturelektrodengerüstes gereinigt werden und anschließend in die Kantenbürststation 6, in der im wesentlichen die untere Kante des gefüllten Faserstrukturelektrodengerüses gereinigt wird. In der Abnahmestation 8 wird nun das gereinigte und gefüllte Faserstrukturelektrodengerüst von dem Transportarm abgenommen. Es kann dann einer Trockenstation zugeführt werden. Möglich ist auch, bei entsprechender Auslegung des Transportsystems, einen Trocknungsschritt bereits vor der Abnahmestation einzufügen.

Die mit der Erfindung erzielbaren Vorteile liegen vor allem darin, daß Faserstrukturelektrodengerüste mit angeschweißtem Stromableiter automatisch gefüllt werden können, daß sehr wenig Handarbeit anfällt, daß sehr hohe Stückzahlen verarbeitbar sind und daß die Herstellung billig, wirtschaftlich und umweltfreundlich ist. Weiterhin ergibt sich eine sehr gleichmäßige Qualität der einzelnen Füllungen, da jedes Gerüst jeden Verfahrensschritt auf ein und dieselbe Art und Weise durchläuft. Eine gleichmäßige Füllung bei Pasten mit differierenden Fließeigenschaften und bei unterschiedlichen Elektrodendicken kann durch eine individuelle Verweilzeit (Verstellung der Taktzeit oder Intensität der Schwinger) jederzeit erzielt werden.


## Patentansprüche

1. Verfahren zum kontinuierlichen Füllen von mit Stromableiterfahnen versehenen Faserstrukturelektrodengerüsten für Akkumulatoren mit einer Aktivmassenpaste unter der Einwirkung von Schwingungen **gekennzeichnet** durch die Kombination folgender Merkmale:
a) die Faserstrukturelektrodengerüste mit einer Porosität von 50 % bis 97 % werden nacheinander mit ihrer

EP 0 348 699 B1

Fahne in eine Transportvorrichtung befestigt,

b) mittels der Transportvorrichtung in ein mit Aktivmassenpaste gefülltes Gefäß eingetaucht, wobei

b1) die Aktivmassenpaste in senkrecht zur Hauptfläche des Faserstrukturelektrodengerüstes gerichtete Schwingungen versetzt wird,

c) nach erfolgter Füllung mittels der Transportvorrichtung aus dem mit Aktivmassenpaste gefülltem Gefäß herausgehoben, anschließend wird

d) das gefüllte Faserstrukturgerüst von überschüssiger Aktivmassenpaste befreit, indem

d1) mittels zweier Schaber der Pastenüberschuß abgeschabt, anschließend

d2) der durch Schaben nicht entfernte Pastenüberschuß durch Bürsten von den Flächen und

d3) von den Kanten abgebürstet wird und

e) das gefüllte und gereinigte Faserstrukturelektrodengerüst wird aus der Transportvorrichtung entfernt.

2. Verfahren nach Anspruch 1,

**dadurch gekennzeichnet,**

daß das gefüllte und gereinigte Faserstrukturelektrodengerüst vor dem Entfernen aus der Transportvorrichtung getrocknet wird.

3. Verfahren nach Anspruch 1 oder 2,

**dadurch gekennzeichnet,**

daß in unmittelbarer Nähe der Eintauchstelle des Faserstrukturelektrodengerüstes in die Aktivmassenpaste frische Paste in einer solchen Menge zudosiert wird, wie sie durch die gefüllten Gerüste aus dem Pastenvolumen ausgetragen wird.

4. Vorrichtung zum kontinuierlichen Füllen von mit Stromableiterfahnen versehenen Faserstrukturelektrodengerüsten mit Aktivmassenpaste bestehend aus

a) einer Transportvorrichtung, an der die Faserstrukturelektrodengerüste mit ihrer Stromableiterfahne befestigbar ist,

a1) die die Elektrodengerüste nacheinander an die einzelnen Stationen bringt

a2) wobei die Elektrodengerüste von der einen Station zur nächsten Station in der gleichen Zeit gebracht werden und wobei

a3) die Taktzeit einstellbar ist

b) einem mit Aktivmassenpaste gefüllten Gefäß, in das die Faserstrukturelektrodengerüste mittels der Transportvorrichtung eintauchbar ist, wobei das Gefäß

b1) mit einer oder mehreren parallel zum eingetauchten Faserstrukturelektrodengerüst angeordneten Schwingplatten versehen ist, die

b2) senkrecht zu der Fläche des Faserstrukturelektrodengerüstes hin- und herbewegbar sind,

c) einer über dem Gefäß angeordneten, aus zwei Abstreifschabern bestehenden Abstreifvorrichtung zur Entfernung überschüssiger Aktivmasse von dem Faserstrukturelektrodengerüst,

d) einer Reinigungsstation bestehend aus

d1) einer Bürststation mit zwei gegensinnig rotierbaren Bürsten, deren Achsen parallel zu den Flächen des Faserstrukturgerüstes angeordnet sind zum Reinigen der Flächen und

d2) einer weiteren Bürststation zum Reinigen der Kanten des gefüllten Faserstrukturelektrodengerüstes und

d3) den Bürstenwalzen zugeordneten sich drehbar angeordneten Abstreifwalzen

e) einer Abnahmevorrichtung für die gefüllten und gereinigten Faserstrukturelektrodengerüste.

5. Vorrichtung nach Anspruch 4,

**dadurch gekennzeichnet,**

daß zwischen der Reinigungsstation d) und der Abnahmevorrichtung e) eine Trocknungszone zwischengeschaltet wird.

## Claims

1. Process for the continuous filling of fibre structure electrode frames for accumulators, said frames being provided with current discharge lugs, with an active compound paste under the action of vibrations, **characterized by** the combination of the following features:

a) the fibre structure electrode frames, having a porosity of 50% to 97%, are secured in succession by their lug in a transport device,

b) are immersed by means of the transport device in a vessel filled with active compound paste,

b1) the active compound paste being vibrated in a direction perpendicular to the principal surface of the fibre structure electrode frame,

4

c) are lifted out of the vessel filled with active compound paste by means of the transport device after filling has been carried out, and

d) the filled fibre structure frame is then freed from excess active compound paste, in that

    d1) the excess paste is scraped off by means of two scrapers,

    d2 ) the excess paste not removed by scraping is then brushed from the faces and

    d3) from the edges by brushes and

e) the filled and cleaned fibre structure electrode frame is removed from the transport device.

2. Process according to Claim 1,

**characterized in that**

the filled and cleaned fibre structure electrode frame is dried prior to removal from the transport device.

3. Process according to Claim 1 or 2,

**characterized in that**

fresh paste is metered in in the immediate vicinity of the point at which the fibre structure electrode frame is immersed in the active compound paste in an amount equivalent to that removed from the paste volume by the filled frames.

4. Device for the continuous filling of fibre structure electrode frames provided with current discharge lugs with active compound paste comprising

a) a transport device on which the fibre structure electrode frames can be secured by their current discharge lug,

    a1) which brings the electrode frames in succession to the individual stations

    a2) the electrode frames being brought from one station to the next station in the same time and

    a3) the cycle time being adjustable

b) a vessel which is filled with active compound paste and into which the fibre structure electrode frames can be immersed by means of the transport device, the vessel

    b1) being provided with one or more vibrating plates which are arranged parallel to the immersed fibre structure electrode frame and

    b2) can be moved back and forth perpendicularly to the face of the fibre structure electrode frame,

c) a stripping device, comprising two stripping scrapers, arranged over the vessel, for removing excess active compound from the fibre structure electrode frame,

d) a cleaning station comprising

    d1) a brushing station having two brushes which can be rotated in the opposite direction and the axes of which are arranged parallel to the faces of the fibre structure frame for the purpose of cleaning the faces and

    d2) a further brushing station for cleaning the edges of the filled fibre structure electrode frame and

    d3) rotatably arranged stripper rollers associated with the brushing rollers

e) a removal device for the filled and cleaned fibre structure electrode frames.

5. Device according to Claim 4,

**characterized in that**

a drying zone is interposed between the cleaning station d) and the removal device e).


**Revendications**

1. Procédé pour remplir en continu d'une pâte de matière active, sous l'action de vibrations, des bâtis d'électrodes à structure fibreuse pourvus de queues conductrices de courant et destinés à des accumulateurs, **caractérisé** par la combinaison des caractéristiques suivantes:

a) les bâtis d'électrodes à structure fibreuse, d'une porosité de 50% à 97%, sont successivement fixés par leur queue conductrice dans un dispositif de transport,

b) au moyen du dispositif de transport, ils sont immergés dans un récipient rempli de pâte de matière active,

    b1) la pâte de manière active étant exposée à des vibrations dirigées perpendiculairement à la surface principale du bâti d'électrode à structure fibreuse,

c) une fois le remplissage effectué et au moyen du dispositif transport, ils sont soulevés hors du récipient rempli de pâte de matière active,

d) puis le bâti à structure fibreuse rempli est nettoyé de la pâte de matière active excédentaire,

    d1) en raclant l'excédent de pâte à l'aide de deux racloirs,

    d2) puis, à l'aide de brosses, l'excédent de pâte non enlevé par les racloirs est enlevé des laces

    d3) et des arêtes,

e) et le bâti d'électrode à structure fibreuse rempli et nettoyé est enlevé du dispositif de transport.

2. Procédé selon la revendication 1,
**caractérisé en ce que**
le bâti d'électrode à structure fibreuse rempli et nettoyé est séché avant de l'enlever du dispositif de transport.

3. Procédé selon la revendication 1 ou 2,
**caractérisé en ce qu'**
au voisinage immédiat du point d'immersion du bâti d'électrode à structure fibreuse dans la pâte de matière active, on ajoute de la pâte fraîche dans une quantité dosée correspondant à celle prélevée du volume de pâte par le bâti rempli.

4. Dispositif pour remplir en continu d'une pâte de matière active des bâtis d'électrodes à structure fibreuse munis de queues conductrices de courant, comprenant

a) un dispositif de transport, auquel les bâtis d'électrodes à structure fibreuse peuvent être fixés par leur queue conductrice de courant,

a1) dispositif qui amène successivement les bâtis d'électrodes aux différents postes,

a2) les bâtis d'électrodes étant simultanément déplacés d'un poste au poste suivant,

a3) et le temps de cycle étant réglable,

b) un récipient rempli de pâte de matière active, dans lequel les bâtis d'électrodes à structure fibreuse peuvent être immergés au moyen du dispositif de transport,

b1) le récipient étant pourvu d'une ou plusieurs plaques vibrantes disposées parallèlement au bâti d'électrode à structure fibreuse immergé,

b2) ces plaques étant mobiles en va-et-vient perpendiculairement à la surface du bâti d'électrode à structure fibreuse,

c) un dispositif détacheur, disposé au-dessus du récipient et comprenant deux racloirs détacheurs, pour enlever la pâte active excédentaire du bâti d'électrode à structure fibreuse,

d) un poste de nettoyage, comprenant

d1) un poste de brossage pour le nettoyage des faces, équipé de deux brosses rotatives en sens contraires, dont les axes sont disposées parallèlement aux faces du bâti d'électrode à structure fibreuse,

d2) un autre poste de brossage pour le nettoyage des arêtes du bâti d'électrode à structure fibreuse rempli,

d3) et des rouleaux détacheurs rotatifs, associés aux rouleaux brosseurs,

e) un dispositif d'enlèvement pour les bâtis d'électrodes à structure fibreuse remplis et nettoyés.

5. Dispositif selon la revendication 4,
**caractérisé en ce qu'**
une zone de séchage est intercalée entre le poste de nettoyage d) et le dispositif d'enlèvement e).